Europäisches Patentamt

**(19)** European Patent Office

Office européen des brevets

**(11)** Publication number: **0 457 562 A1**

**(12)** # EUROPEAN PATENT APPLICATION

**(21)** Application number: **91304348.5**

**(22)** Date of filing: **15.05.91**

**(51)** Int. Cl.⁵: **G06F 15/68, G06F 15/70**

**(30)** Priority: **17.05.90 GB 9011048**

**(43)** Date of publication of application:
**21.11.91 Bulletin 91/47**

**(84)** Designated Contracting States:
**DE GB**

**(71)** Applicant: **CROSFIELD ELECTRONICS
LIMITED
Wedgewood Way
Stevenage Hertfordshire SG1 4QN (GB)**

**(72)** Inventor: **Kirk, Richard Antony
65 Hemel Hempstead Road
Redbourn, Hertfordshire AN3 7NL (GB)**

**(74)** Representative: **Skone James, Robert
Edmund et al
GILL JENNINGS & EVERY 53-64 Chancery
Lane
London WC2A 1HN (GB)**

**(54) Control data array modification.**

**(57)** A binary data array may be modified by scanning the array with a window in the form of a border (22) surrounding a central region (21). If the border values (22) are all the same, the central region pixels (21) take on a predefined value. Scanning takes place over separate sections of the border (22) and resultant values from tests of sections are combined to ascertain whether there is any difference from the predefined value. Special values are stored representative of groups of pixels (21) in each section of the border (22) for use in processing. This modification may be applied to binary images or masks to remove pinholes.

FIG.1

EP 0 457 562 A1

This invention relates to modification of control data arrays in particular to correct wrong decisions made during their formation.

Binary control data arrays are used for example in defining areas of images to be assembled into a composite image. The binary control data array allocates one bit to each pixel of an image; the bit will be either 0 or 1 showing that the pixel marked should be included in one class or another for processing. The decision as to which value the bit will have, will depend upon criteria chosen by the operator.

One method of defining a binary control data array is known as colour selective masking in which each of the individual colour values of a coloured image pixel is checked to see whether or not it falls within a given range. The results are then logically combined to give a True or False result for that pixel which is used to determine the control array value.

Binary control data arrays produced from images by applying algorithms of this type can produce a control data array with occasional single pixel values out of keeping with the surrounding region. The result can be to produce a pin-hole effect within an area. Present techniques for rectifying this situation rely on manually operable systems and the human eye. This is time consuming and subject to errors.

In accordance with one aspect of the present invention a method of modifying a binary data array defining a region of an image comprises scanning the binary data array with a window which is in the form of a border surrounding a central region of at least one pixel; and, at each scanning position,scanning the pixel values or special values representing the pixel values in the border, and if all pixel values in the border are the same, causing the or each binary data array pixel value in the corresponding central region to have a predefined value, wherein the border pixels are scanned in sections , the resultant values from tests of each section being combined to ascertain whether there is any difference from the predefined value; and wherein special values are stored representative of groups of pixels for use at subsequent window positions.

This method allows flaws resulting from the production of a control data array to be corrected automatically by replacement with a pixel value in keeping with the surrounding pixel values so that a better image is produced using the control data array.

By pairing adjacent pixels starting from an origin and one pixel displaced from the origin there will be a value for a pair of pixels at all window positions. Special values can be built up from pairs to produce a single special value for a border section.

This approach may be used to modify binary images or hard masks.

In accordance with a second aspect of the present invention apparatus for modifying a binary data array for use in defining a region of an image comprises scanning means to scan the binary data array with a window in the form of a border surrounding a central region of at least one pixel and to scan the pixel values or special values representing the pixel values in the border, and modifying means operable at each scanning position to cause the or each binary data array pixel value in the corresponding central region to have a predefined value if all the pixel values in the border are the same, wherein the border pixels are scanned in sections; and means to combine the resultant values from tests of each section to ascertain whether there is any difference from the predefined value, and storage means to store special values representative of groups of pixels for use at subsequent window positions.

In order to increase the scanning speed, scanning of the border values may take place over separate horizontal and vertical sections of the border, the resultant values of each section being compared to ascertain whether there is any difference and scanning of the border terminated as soon as a difference in border values is measured. If the values in each section of the border are the same, then these values are compared to see if all border values are equal.

Preferably the central region is from one to four pixels in size. The window will usually be square or rectangular in shape although non standard border shapes can be accommodated. The number of pixels thickness of the border may be greater than one and could vary around the window.

An example of a method and apparatus in accordance with the present invention will now be described with reference to the accompanying drawings in which:-

Figure 1 is a block diagram of the apparatus;
Figure 2 shows a flow diagram describing the modifying sequence;
Figure 3a illustrates a window with a one pixel central region;
Figure 3b shows a window with a four pixel central region and border of more than one pixel thickness.
Figure 3c shows a window with a rectangular border;
Figure 4 shows the code steps for one example of an algorithm for scanning an image;
Figure 5 shows a window of non-standard shape; and,
Figure 6 illustrates the formation of special values.

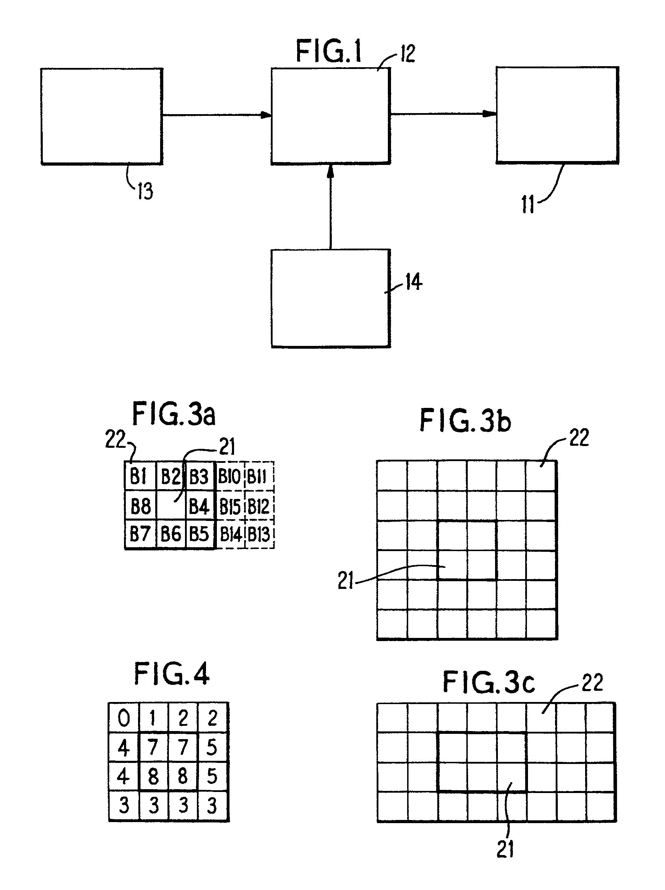

Figure 1 is a block diagram of apparatus for scanning a window across a previously generated control data array. A central processing unit 12 is connected to a control data array memory 13, window coordinate input means 14 and an optional control data array output memory 11 if the corrections for pinholes are not to be done in-place to the control data array memory 13.

A control data array, or mask, is generated initially by an operator outlining areas of an image to be coded 1 or 0, or alternatively a colour selective masking technique may be used as described above and in more detail in copending European Patent Application No. 91300862.9. The array is stored in the memory 13. The window coordinates are set (step 1, Figure 2) by an operator via the input means 14.

The processor 12 is initiated (step 2) to simulate the window defined by the input means 14 so as to scan the image stored in the memory 13 by accessing at each scan position successive locations defined by the window coordinates. A representation of a window is shown in Figure 3a. Each control data array pixel 22, B1→Bn, falling within the window border has a particular value. The processor 12 initially obtains the value of pixel B1 and compares this with that of B2 (step 3). If the values are found to be the same (step 4) the processor 12 compares B1 with B3 and so on. This continues until all the pixels in the border, Bx have been compared with B1, where x=2→n, unless a comparison of Bx and B1 results in a difference in their respective pixel values, when the processor aborts that scan cycle and the pixel values in the central region 21 are left as they are. If a scan cycle is completed without aborting then, in this example (Figure 3a) the central region pixel value is changed to the value of the border pixels. As none of the pixels within the centre region 21 now have pinholes, the window may then be advanced to a new position where the central region does not overlap the old one. Otherwise the processor moves the window by a single pixel width to its next scan position. (step 10). If the end of the image has not been reached then the process is repeated. Pin holes may be either light in a dark background or dark specks on a light background.

In Figure 3b the border 22 is of two pixel thickness with four central area pixels 21. If all of the pixels in the border 22 have the same value then the pixels in the central area 21 are all given that value.

The thickness of each side of the border need not be the same as is shown, for example, by the rectangular border in Figure 3c. As with the border of Figure 3b all the border pixels 22 in Figure 3c must have the same value if the values of the central area pixels 21 are to be changed to that value.

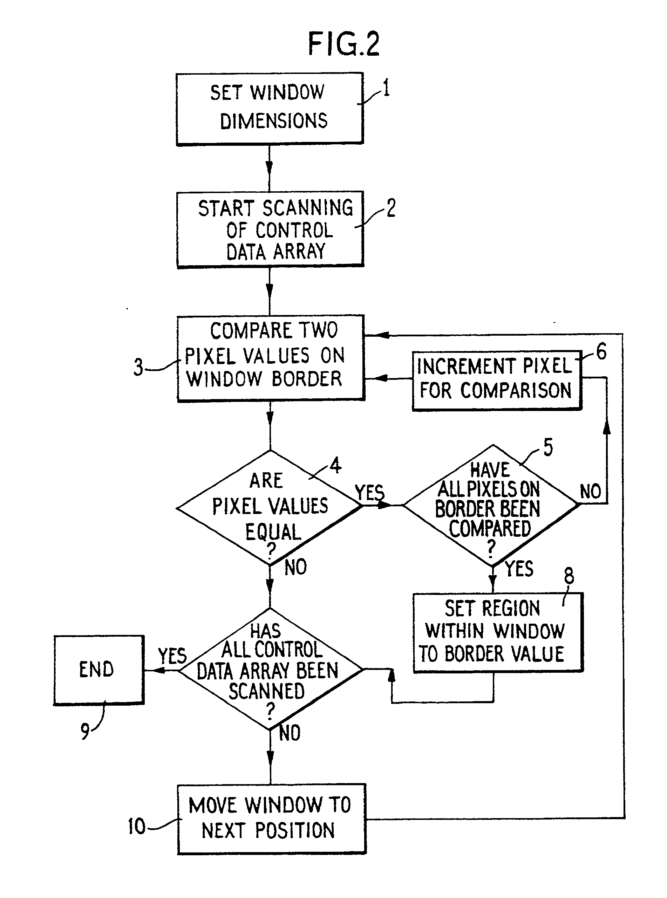

Figure 4 illustrates the application of one example of an algorithm in which the numbers refer to steps in the code.

A mask parameter M(x,y) is set to the values 0 for mask off, and 1 for mask on. A filter is applied to determine whether all the values were set to 1 on the perimeter, and if so then sets the values within it to 1. The algorithm would be...

```
(1)   M'(x,y) = M(x,y)      ..AND. M(x+1,y)      -  Check M is
                                                 -  set on top
(2)   M'(x,y) = M'(x,y)     .AND. M'(x+2,y)         and bottom
(3)   M'(x,y) = M'(x,y)     .AND. M'(x,y+3)      -  edges...
(4)  M''(x,y) = M(x,y+1)    .AND. M(x,y+2)       -
(5)  M''(x,y) = M''(x,y)    .AND. M''(x+2,y)     -  ..and sides
(6)   M'(x,y) = M'(x,y)     .AND. M''(x,y)       -
(7)  M''(x,y) = M'(x-1,y-1) .OR.  M'(x-2,y-2)-   -  ..and if so
(8)  M''(x,y) = M''(x,y)    .OR.  M''(x,y+1)     -  set M in
(9)   M(x,y)  = M''(x,y)    .OR.  M(x,y)         -  the centre
```

M(x,y) represents the original array data.

M'(x+n,y+m) and M'' (x,y) represent scratch arrays the same size as the original image, but being addressed with an offset of ( n, m) where each of the stages (1) → (9) is performed for the whole array (i.e. all x, all y) before the next one is started.

This algorithm allows intermediate values to be used more than once. E.g. each side of a square appears in two borders as a left and a right or a top and a bottom side. If all the intermediate values are stored it is not necessary to calculate them twice.

Similar algorithms can be generated for any perimeter of N*M, the number of steps rising as log2(N*M).

For greater speed gains conditional jumps are used. Eg. if the border has a 'set' value throughout, then all bits may be set within the border, and thereafter left alone. The algorithm described above continues to test whether any of the other possible borders are 'set' whether it needs to or not.

Testing for pin holes is generally carried out over a full screen to modify e.g. light pin holes surrounded by a dark border to give the pin hole the same colour as the border. If it is desired to modify both light in dark and dark in light over a single screen an additional bit is required in the data.

In Figure 5 a window of non standard shape is shown. In this case the edge is divided into non-linear sections 22a-d for comparison. Initially, the pixels within each section 22a-d are examined separately. If within any section they are the same, a special value is allocated to that section. The special values are then compared and if they each represent pixels having the same value, then all pixels in the central region 21 are changed to that value. In addition, as shown, the windows need not be only square or rectangular.

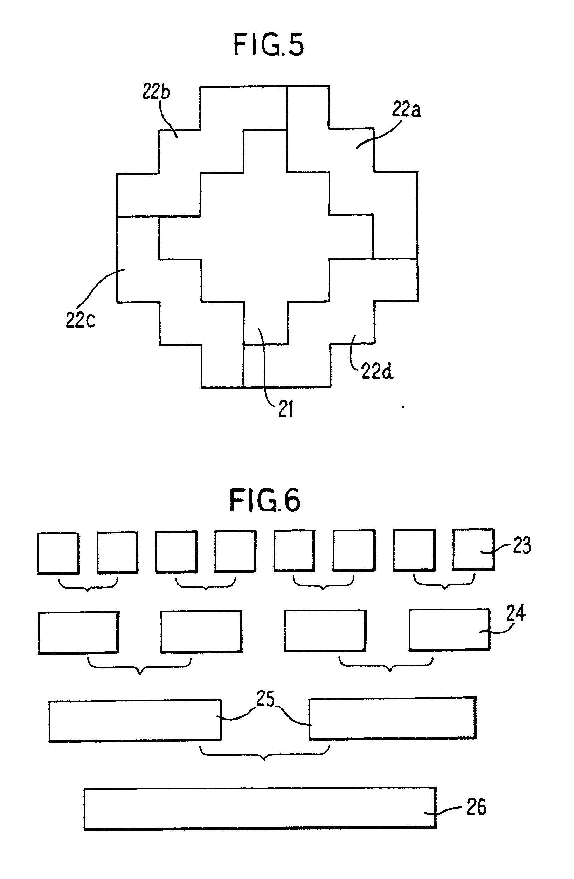

Figure 6 shows how a border of side length eight pixels may be tested in three operations. Initially pairs of neighbouring pixels 23 are compared and if the pixel values are the same a first special value 24 is recorded for that pair. Neighbouring pairs of the first special values 24 are then compared to produce second special values 25 if the values 24 are the same, and then these are compared to produce a single representative special value 26 for the row if the values 25 are the same.

These special values may be used during later processing as will now be explained with reference to Figure 3a. The window is initially positioned to include pixels B1→B8 in its border surrounding a single pixel B9. A comparison of border pixels begins by comparing B1 with B2. If they have the same value a single special value is allocated to represent B1 and B2. If they are different the comparisons at that window position cease and the window moves a single pixel to the right and new comparisons begin. Assuming the pixels B1 and B2 are the same B2 is compared with B3. If these are the same they are allocated their own special value. B1, B2 and B3 together, will also be allocated a special value if they all have the same pixel value. B3 is compared with B4 and the combination allocated a special value if they are the same. B4 is compared with B5 and a special value is allocated if they are the same. There will be a special value to represent B3, B4 and B5 if they are the same.

If the special values indicate that all the pixels B1-B8 have the same value then B9 is set to that value and the window is moved to cover a new set of pixels with its left hand edge lying on the border between pixels B3-B5 and B10, B15, B14.

In contrast, if all the pixels B1 to B7 have the same value but pixel B8 has a different value the border will not be the same throughout, so the value of pixel B9 is not altered and the window 27 moves only one pixel to the right.

The window now defines a border comprising pixels B2, B3, B10, B15, B14, B5, B6 and B9, surrounding pixel B4. It is known that B2 and B3 are the same from their previously stored special value so this can now simply be combined with B10 to see if B10 has the same value and if so a new special value representing B2, B3 and B10 is stored. B10 is compared with B5 and B15 with B14. The next comparison is of B14 with the special value for B5 and B6. If these are the same a new special value for the combination of B14, B5 and B6 is stored. B6 is compared with B9 and then B9 with B2 and respective special values are stored for each pair when the compared values are the same. If any compared pair of values are not the same, comparisons at that window position cease and the window is moved another pixel to the right. B3, B4 and B5 are already represented by a stored special value as are B3 and B10 so the special values reduce the amount of recalculation needed at each subsequent window position.

## Claims

1. A method of modifying a binary data array defining a region of an image the method comprising scanning the binary data array with a window which is in the form of a border (22) surrounding a central region of at least one pixel (21); and, at each scanning position, scanning the pixel values or special values representing the pixel values in the border, and if all pixel values in the border are the same, causing the or each binary data array pixel value in the corresponding central region to have a predefined value, wherein the border pixels are scanned in sections, the resultant values from tests of each section being combined to ascertain whether there is any difference from the predefined value; and wherein special values (24,25) are stored representative of groups of pixels for use at subsequent window positions.

2. A method according to claim 1, wherein the scanning of the border pixels takes place over separate horizontal and vertical sections of the border (22), the resultant values of each section being compared to ascertain whether there is any difference, scanning of the border being discontinued as soon as a difference in border values is measured.

3. Apparatus for modifying a binary data array for use in defining a region of an image comprising scanning

4

means (14) to scan the binary data array (13) with a window in the form of a border surrounding a central region of at least one pixel and to scan the pixel values or special values representing the pixel values in the border; and modifying means operable at each scanning position to cause the or each binary data array pixel value in the corresponding central region to have a predefined value if all pixel values in the border are the same, wherein the border pixels are scanned in sections; and means (12) to combine the resultant values from tests of each section to ascertain whether there is any difference from the predefined value and storage means to store special values representative of groups of pixels for use at subsequent window positions.

4. Apparatus according to claim 3, wherein the window is defined as having a central region of four pixels (21).

5. Apparatus according to claim 3 or claim 4 in which the window is square in shape.

6. Apparatus according to claim 3 or claim 4 in which the window is rectangular in shape.

7. Apparatus according to claim 3 in which the window is three pixels square in size.

8. Apparatus according to any of claims 3-7 in which the window has a border (22) of more than a single pixel thickness.

## FIG.1

## FIG.3a

| B1 | B2 | B3 | B10 | B11 |
|----|----|----|-----|-----|
| B8 |    | B4 | B15 | B12 |
| B7 | B6 | B5 | B14 | B13 |

## FIG.3b

## FIG.4

| 0 | 1 | 2 | 2 |
|---|---|---|---|
| 4 | 7 | 7 | 5 |
| 4 | 8 | 8 | 5 |
| 3 | 3 | 3 | 3 |

## FIG.3c

# FIG.2

# FIG.5

*22b* 22a

*22c*

*22d*

*21*

# FIG.6

23

24

25

26

European Patent
Office

**EUROPEAN SEARCH REPORT**

Application Number

EP    91 30 4348

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IBM TECHNICAL DISCLOSURE BULLETIN. vol. 31, no. 9, February 1989, NEW YORK US pages 235 - 236; 'Image system quality and data compression enhancement by excision of isolated single pixels and quad pel groups ' * the whole document * * figures 1,2 * | 1,3,4,5, 7 | G06F15/68 G06F15/70 |
| A | DE-A-3 838 032 (HITACHI LTD.) * column 1; figures 39,40 * | 1,3,5,7 | |
| A | EP-A-165 734 (THE GOVERNOR AND COMPANY OF THE BANK OF ENGLAND) * abstract * * page 26 - page 29; figures 4A-4B * | 1,3,5,6, 7,8 | |
| A | EP-A-18 861 (SERVICE D'EXPLOITATION INDUSTRIELLE DES TABACS ET ALLUMETTES) * page 2, line 26 - page 3, line 7 * | 1,2 | |
| | | | TECHNICAL FIELDS SEARCHED (Int. Cl.5 ) |
| | | | G06F |

The present search report has been drawn up for all claims

| Place of search | Date of completion of the search | Examiner |
|---|---|---|
| THE HAGUE | 29 AUGUST 1991 | · CHATEAU J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)